# EUROPÄISCHE PATENTSCHRIFT

(11) **EP 0 567 493 B1**
(45) Veröffentlichungstag und Bekanntmachung des Hinweises auf die Patenterteilung: **14.06.1995**
(21) Anmeldenummer: 92902330.7
(22) Anmeldetag: 15.01.1992
(51) Int. Cl.: C04B 18/06

(54) **VERWERTUNGSVERFAHREN FÜR MÜLL-, KLÄRSCHLAMM- UND SONDERMÜLLVERBRENNUNGSASCHE**
METHOD OF RECYCLING ASH ARISING FROM THE INCINERATION OF REFUSE, SEWAGE SLUDGE AND TOXIC WASTE
PROCEDE D'UTILISATION DES CENDRES D'INCINERATION D'ORDURES, DE BOUES DE CURAGE ET DE DECHETS DONT L'EVACUATION EST REGLEMENTEE

(30) Priorität: 18.01.1991 DE 4101347
(43) Veröffentlichungstag der Anmeldung: 03.11.1993
(73) Patentinhaber: Bergwerksverband GmbH, D-45307 Essen (DE)
(72) Erfinder: ZYSK, Karl-Heinrich, D-3392 Clausthal-Zellerfeld (DE); SCHROER, Diethelm, D-4250 Bottrop (DE)
(86) Internationale Anmeldenummer: EP9200064
(87) Internationale Veröffentlichungsnummer: WO9212942

(56) Entgegenhaltungen:
- EP-A- 0 369 946
- DE-C- 3 718 336
- Derwent's abstract, Nr. 88-159 660/23, SU 1 350 140, publ. Woche 8823

## Beschreibung

Die Erfindung betrifft ein Verfahren zur Herstellung von künstlichen Zuschlagstoffen für die Bauwirtschaft und für den Einsatz im untertägigen Berg- und Tunnelbau durch Mischen von entsprechenden Aschen mit Zement, Durchfeuchten mit Wasser, Verpressen und Aushärten.

Die Verknappung natürlicher Vorkommen in Zusammenwirken mit der eingeschränkten Nutzung abbauwürdiger Vorkommen zur Gewinnung von Kies und Sand und als Zuschlagstoff, aber auch die Verknappung des Deponieraums für schadstoffhaltige Reststoffe aus Verbrennungsanlagen, haben zu Überlegungen geführt, wie die feindispergierten Reststoffe bzw. Aschen aus solchen Anlagen in irgendeiner Form nutzbar gemacht werden können. Die genannten Verbrennungsrückstände bestehen - bis auf Spuren - hauptsächlich aus anorganischen Bestandteilen, deren Schadstofffracht aus Metallen und Schwermetallen besteht, die sich in den Filterstäuben, Kesselaschen und im Granulat anreichern. Besonders diejenigen Verbrennungsrückstände sind von Interesse, die durch die thermische Behandlung bei Temperaturen von ∼ 700°C entstehen, wobei von untergeordneter Bedeutung ist, welches Verbrennungsverfahren jeweils angewendet wurde. Diese Rückstände können ebenfalls Bestandteile aus der Rauchgasentschwefelung beinhalten, da bei modernen Rauchgasreinigungsverfahren, wie z. B. der primären Entschwefelung im Brennraum, die Reststoffe als Gemisch aus Asche und Entschwefelungsprodukten anfallen.

Aus der DE-PS 35 39 264 ist ein Verfahren bekannt, bei dem die Steinkohlenflugasche in Form eines glasigen, kugeligen Feingutes mit hochfeiner Kohleasche aus der zirkulierenden Wirbelschichtverbrennung und Zement gemischt, mit Wasser durchfeuchtet und agglomeriert wird.

Der Erfindung liegt daher die Aufgabe zugrunde, auch die hauptsächlich feindispergierten anfallenden Reststoffe aus der Verbrennung von Müll, Klärschlamm und Sondermüll aufzuarbeiten und dann verschiedenen Einsatzgebieten zuzuführen.

Die Aufgabe wird erfindungsgemäß dadurch gelöst, daß die aus einer Feuerung mit über 700°C Betriebstemperatur stammenden Aschen in Form von Filterstäuben, Kesselaschen und Granulat einzeln oder im Gemisch mit Portlandklinkern oder Portlandzement vermahlen und dann unter Wasserzugabe von 0 - 20 %, bezogen auf den Feststoff, befeuchtet und agglomeriert werden, daß das Gemisch unter weiterer Wasserzugabe einem Abbindeprozeß unterzogen und dann als Zuschlagstoff eingesetzt wird.

Durch das gemeinsame Zerkleinern des Portlandklinker und der Aschen in den verschiedenen Formen wird eine sehr intensive Vermischung sichergestellt. Aus diesem aufbereiteten Mischgut werden in einem Agglomerationsprozeß durch Zugabe von feinverteiltem Wasser in besonders abgestimmten Wasser-Feststoff-Verhältnissen Agglomerate gebildet. Als Agglomerationsverfahren werden vorzugsweise diejenigen verwendet, die unter Einwirkung von Druck zu einer Verdichtung des Mischgutes führen und auf diese Weise Agglomerate mit möglichst geringen Porositäten und hohen Rohdichten erbringen. Derartige Agglomerate besitzen nach dem Kompaktieren bereits eine ausreichend große Festigkeit und bleiben formstabil. Durch die Wasserzugabe vor der Agglomeration und die entstehende Reibungswärme bei der Verdichtung binden die Agglomerate durch die Bindemittelkomponente ab, wobei durch die intensive Vermischung der Ausgangskomponenten eine hohe Haftung der Reststoffe an der Bindemittelmatrix erreicht wird.

Nach einer zweckmäßigen Ausbildung der Erfindung ist vorgesehen, daß die 1 - 90 Gew.-% Asche mit 10 - 95 Gew.-% Bindemittel gemischt und dann weiterverarbeitet wird. Diese Lehre gibt die Möglichkeit, je nach Gegebenheiten, die geeigneten Bindemittelkomponenten mit den anorganischen Komponenten zusammenzustellen und so die Voraussetzungen für eine günstige Verarbeitung zu schaffen.

Eine weitere zweckmäßige Ausbildung sieht vor, daß dem Gemisch von Asche und Bindemittel 10 - 50 Gew.-% weitere anorganische, nichtmetallische Stoffe (Kraftwerksasche) zugemischt wird. Hierdurch kann gezielt eine optimierte Kornverteilung des Ausgangsmischgutes sichergestellt werden. Gleichzeitig ist die Möglichkeit gegeben, auch weitere problematische Reststoffe so einzubinden, daß sie einer optimalen Verwertung zugeführt werden können.

Zu erwähnen ist noch, daß die Festigkeit der Agglomerate durch die Reaktionsprodukte aus Bindemittel, Reststoffen und Wasser noch gesteigert wird, indem gemäß dem Hauptanspruch die Grünlinge bei weiterer Wasserzufuhr ausreichend lange gelagert werden. Diese Verfestigung der Agglomerate durch Hydratbildung führt weiterhin zu einer nochmaligen Verringerung der Porosität und gleichzeitig zu einer Verringerung der mittleren Porenradien der hergestellten Agglomerate. Das bei diesem feuchten Lagern anfallende überschüssige Wasser wird für die Benetzung des pulverförmigen Ausgangsmischproduktes weiterverwendet, so daß eine Umweltbelastung durch eluierte Schadstoffe minimiert, im Optimalfall durch den geschlossenen Kreislauf sogar verhindert wird. Die Rezirkulation des mit eluierten Bestandteilen angereicherten Wassers führt zum Einstellen eines Gleichgewichts zwischen den Bestandteilen der Agglomerate und denen im verwendeten Wasser.

Die Erfindung gibt die Möglichkeit, die abgebundenen Agglomerate soweit vorab zu untersuchen, daß auch Schwankungen in der Zusammensetzung der Ausgangskomponenten, insbesondere bezüglich der zu erwartenden Schadstofffracht, gezielt von vornherein so verarbeitet werden, daß eine Auslaugung der Agglomerate minimiert wird. Die geringe Porosität und die kleinen mittleren Porenradien der Agglomerate führen vorteilhaft zu einer Immobilisierung der Schadstofffracht, die sie zwangsweise aufgrund der Vorgaben mitführen.

Die Agglomerate reagieren durch die Bindemittelzugabe und durch das Reaktionsprodukt Calciumhydroxid alkalisch, so daß die pH-wertabhängige Auslaugung von Schwermetallen weiterhin vermindert wird. Vorteilhaft ist weiter, daß die Agglomerate optisch in beliebigen Formkörpern erzeugt werden können, wobei durch Zerkleinerung und Siebung diese Agglomerate den Anforderungen bezüglich der Kornverteilung optimal entsprochen werden kann.

Um für den nachfolgenden Verarbeitungsprozeß optimale Oberflächen vorzugeben und auch, um ein günstiges Korngemisch sicherzustellen, sieht die Erfindung vor, daß die erhärteten Agglomerate gebrochen werden können und dann mit einem bindemittelhaltigen Mörtel oder Beton verarbeitet werden. Eine solche Verarbeitung ist sowohl im obertägigen wie im untertägigen Bereich möglich, weil sich die erhärteten Agglomerate als optimale Zuschlagstoffe erweisen.

Vorteilhaft ist schließlich, daß sich diese hydraulisch abgebundenen Agglomerate vorteilhaft in das Bindemittelsystem von Mörtel und Beton einfügen, ja, sie zeichnen sich sogar durch verbesserte Haftung an der Kontaktzone zur Bindemittelmatrix aus. Weiter vorn ist bereits darauf hingewiesen worden, daß auch weitere Reststoffe in die Ausgangsmischung eingearbeitet werden können, aus denen dann die Agglomerate erzielt werden. Es ist aber auch möglich, die erhärteten Agglomerate zusammen mit Flotationsbergen oder anderen Reststoffen unter Tage, beispielsweise als Dammbaumaterial oder ähnlichem, einzusetzen.

Mögliche Einsatzgebiete zur Verwendung der Agglomerate aus Müll-, Klärschlamm- und Sondermüllverbrennungsrückständen sind die Bauwirtschaft und der untertägige Bergbau. Innerhalb der Bauwirtschaft können die Agglomerate als Zuschlag in Beton, Mörtel und Fertigprodukten eingesetzt werden.

Die Anwendung im untertägigen Bergbau erfolgt als Korn im Bergbaumörtel, als Hinterfüll- und Dammbaustoff oder als Hohlraumverfüller, im bindemittelverfestigten Versatz oder in der Bruchhohlraumverfüllung. Der Einsatz als Bestandteil der Masse zur Bruchhohlraumverfüllung ermöglicht es, ohne weitere Bindemittelzugabe die Agglomerate vorzugsweise mit Flotationsbergen oder anderen Abgängen des Bergbaus zu mischen und auf diese Weise dichte Massen zu erzeugen, in denen isoliert voneinander Grobkörner mit immobiler Schadstofffracht eingebracht werden können.

Der Transport zum Einsatzort unter Tage findet hydromechanisch oder pneumatisch über zentrale Förderanlagen statt. Bei dezentralen Förderanlagen erfolgt die Anlieferung des Fertiggemisches als Sackware, in bigbags oder ähnlichen Gebinden. Die Agglomerate können der hydromechanischen Fernförderung beigegeben werden oder sie können in geschlossenen Systemen ebenso in den pneumatischen Förderanlagen transportiert werden, in denen sie gleichzeitig als verschleißarmes Fegekorn dienen. Die Einbringung bzw. Endverarbeitung erfolgt dann aus dem Vorortsilo, entweder hydromechanisch oder pneumatisch.

## Patentansprüche

1. Verfahren zur Verarbeitung von schadstoffhaltigen Reststoffen aus Verbrennungsanlagen, inbesondere von Schwermetalle, Salze und PCB's enthaltenen Aschen aus Müllverbrennungsanlagen zu künstlichen Zuschlagstoffen für die Bauwirtschaft oder für den Einsatz im untertägigen Berg- und Tunnelbau durch Mischen der Aschen mit Zement oder anderen organischen Bindemitteln, Wasserzugabe, Agglomeration und Aushärten, **dadurch gekennzeichnet,** daß die Aschen gemeinsam mit dem Bindemittel vermahlen werden und daß durch Zugabe von Wasser gleichzeitig mit der Agglomeration ein Lösen der Schadstoffe bewirkt wird, die dann durch weitere Wasserzugabe durch den Zement kristallin eingebunden und nach dem Aushärten der Mischung im entsprechend zu bearbeitenden Zuschlagstoff sicher gelagert werden.

2. Verfahren nach Anspruch 1, **dadurch gekennzeichnet,** daß die 5 - 90 Gew.-% Asche mit 10 - 95 Gew.-% Bindemittel gemischt und dann weiterverarbeitet werden.

3. Verfahren nach Anspruch 1, **dadurch gekennzeichnet,** daß dem Gemisch von Asche und Bindemittel 10 - 50 Gew.-% weitere anorganische, nichtmetallische Stoffe (Kraftwerksasche) zugemischt werden.

4. Verfahren nach Anspruch 1, **dadurch gekennzeichnet,** daß das Gemisch nach dem Durchfeuchten bis auf > 1,8 g/cm³ Dichte verfestigt wird.

5. Verfahren nach Anspruch 1, **dadurch gekennzeichnet,** daß die erhärteten Agglomerate gebrochen und dann mit einem bindemittelhaltigen Mörtel oder Beton verarbeitet werden.

6. Verfahren nach Anspruch 1, **dadurch gekennzeichnet,** daß die erhärteten Agglomerate zusammen mit Flotationsbergen oder anderen Reststoffen unter Tage als Dammbaumaterial oder ähnliches eingesetzt werden.

7. Verfahren nach Anspruch 1 und Anspruch 6, **dadurch gekennzeichnet,** daß die erhärteten Agglomerate mit den eingebundenen Reststoffen pneumatisch oder hydromechanisch zur Endverarbeitung transportiert werden.

## Claims

1. A process for making noxious-matter-containing residues from incineration plants - in particular ashes containing heavy metals, salts and PCBs and originating from refuse incineration plants - into synthetic aggregates for the building trade or for use in underground mining and tunnel construction through mixing of the ashes with cement or other organic binding agents, the addition of water, agglomeration and hardening, characterised in that the ashes are ground together with the binding agent and in that through simultaneous water addition and agglomeration there is effected dissolving of the noxious matter which is then, through further water addition, bound in a crystalline manner through the cement and is securely stored after hardening of the mixture in an aggregate to be suitably processed.

2. A process in accordance with Claim 1, characterised in that 5 - 90 wt.% of ashes is mixed with 10 - 95 wt.% of binding agent and is then further processed.

3. A process in accordance with Claim 1, characterised in that to the mixture of ashes and binding agent there is added 10 - 50 wt.% of other inorganic non-metallic matter (power station ashes).

4. A process in accordance with Claim 1, characterised in that the mixture is strengthened after soaking to > 1.8 g/cm³ density.

5. A process in accordance with Claim 1, characterised in that the hardened agglomerates are broken and then processed with a binding-agent-containing mortar or concrete.

6. A process in accordance with Claim 1, characterised in that the hardened agglomerates together with floating tailings or other residues are used underground as bank construction material or the like.

7. A process in accordance with Claim 1 and Claim 6, characterised in that the hardened agglomerates with the bound-in residues are pneumatically or hydromechanically transported to the final processing.

## Revendications

1. Procédé de retraitement de résidus toxiques provenant d'installations de combustion, en particulier de cendres, contenant des métaux lourds, des sels et des PCB, provenant d'installations d'incinération d'ordures, en agrégats artificiels pour l'industrie de la construction ou pour l'utilisation dans la mine ou la construction de tunnels, par mélange des cendres avec du ciment ou d'autres liants organiques, addition d'eau, agglomération et durcissement, caractérisé en ce que les cendres sont broyées en même temps que le liant, et en ce que par addition d'eau à l'agglomération, on réalise une solubilisation des produits toxiques, qui sont alors liés de manière cristalline dans le ciment par addition d'eau supplémentaire, et après durcissement du mélange, entreposés de manière sure dans un agrégat à retraiter de manière appropriée.

2. Procédé selon la revendication 1, caractérisé en ce que 5-90% en poids de cendres sont mélangés avec 10-95% de liant et ensuite retraités.

3. Procédé selon la revendication 1, caractérisé en ce que l'on ajoute au mélange de cendres et de liant 10-50% en poids d'autres matières inorganiques non métalliques (cendres de centrales électriques).

4. Procédé selon la revendication 1, caractérisé en ce qu'après imprégnation d'eau, le mélange est compacté jusqu'à une masse volumique > 1,8 g/cm³.

5. Procédé selon la revendication 1, caractérisé en ce que les agglomérés durcis sont rompus, et ensuite retraités avec un béton ou mortier contenant un liant.

6. Procédé selon la revendication 1, caractérisé en ce que les agglomérés durcis sont utilisés dans la mine, en même temps que des rejets de flottation ou d'autres résidus, pour servir de matériau pour la construction de remblais ou similaires.

7. Procédé selon la revendication 1 et la revendication 6, caractérisé en ce qu'avec les résidus incorporés, les agglomérés durcis sont transportés pneumatiquement ou hydromécaniquement vers le traitement final.
